(19) **Europäisches Patentamt**

**European Patent Office**

**Office européen des brevets**

(11) **EP 1 048 931 A2**

(12) **EUROPÄISCHE PATENTANMELDUNG**

(43) Veröffentlichungstag:
02.11.2000 Patentblatt 2000/44

(51) Int. Cl.⁷: **G01D 3/028**, G01D 18/00

(21) Anmeldenummer: **00106496.3**

(22) Anmeldetag: **25.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.04.1999 DE 19918821**

(71) Anmelder: **WABCO GmbH & CO. OHG**
**30453 Hannover (DE)**

(72) Erfinder:
• **Eden, Gerd**
**26524 Hage (DE)**
• **Früh, Jürgen, Dr.**
**30519 Hannover (DE)**
• **Lissel, Norbert**
**30890 Barsinghausen (DE)**
• **Schäl, Andreas**
**31171 Nordstemmen (DE)**
• **Lustfeld, Eike**
**31547 Rehburg-Loccum (DE)**

(74) Vertreter: **Schrödter, Manfred**
**WABCO GmbH & Co. OHG,**
**Postfach 91 12 62**
**30432 Hannover (DE)**

(54) **Auswerteverfahren für einen induktiven Wegsensor, insbesonders in der Anwendung für eine Fahrzeugkupplung**

(57) Bei dem erfindungsgemäßen Auswertungsverfahren für einen induktiven Wegsensor wird ein Sensor-Meßwert zuerst temperaturkompensiert und dann kalibriert.

Die Temperaturkompensation wird iterativ unter Verwendung von zwei Funktionen durchgeführt; die erste Funktion basiert auf der Temperatur-Abhängigkeit des Sensor-Meßwertes, und eine zweite Funktion basiert auf der Abhängigkeit des bei einer Bezugstemperatur geltenden Temperaturkoeffizienten des verwendeten Sensor-Typs vom Sensor-Meßwert.

Die Kalibrierung erfolgt unter Verwendung einer Kalibriergeraden, die durch zwei Kalibrierpunkte festgelegt ist. Für den Einsatz des Wegsensors als Kupplungssensor wird als erster Kalibrierpunkt eine Kupplungsstellung gewählt, die dem vollständig eingerückten Zustand entspricht, und für den zweiten Kalibrierpunkt wird die Kupplungsstellung gewählt, bei der die Kupplung gerade so weit ausgerückt ist, daß keine Momentübertragung mehr stattfindet. Die Kalibrierung wird beim Einbau der Kupplung vorgenommen.

Durch kontinuierliche Wegmessung im Kupplungszustand der eingerückten Kupplung während der Betriebsdauer des Fahrzeuges ist der Verschleißzustand der Kupplung überprüfbar; es kann eine Warnung an den Fahrer ausgegeben werden, wenn der Kupplungsbelag eine bestimmte vorgegebene Restbelagstärke erreicht.

Der Zustand der ausgerückten Kupplung ist ebenfalls durch eine Wegmessung im Fahrbetrieb zu ermitteln, was vor allem im Zusammenhang mit dem Betrieb einer teil- oder vollautomatisierten Getriebeschaltung von Bedeutung ist.

Fig. 5

EP 1 048 931 A2

**Beschreibung**

Die Erfindung betrifft ein Auswerteverfahren für einen induktiven Wegsensor gemäß dem Oberbegriff des Patentanspruches 1.

Aus der DE-OS-43 18 263, die vollinhaltlich zum Gegenstand dieser Patentanmeldung gemacht wird, ist es bekannt, zur Kompensation der Temperaturabhängigkeit des Meßwertes eines induktiven Wegsensors die Temperatur ($T_{IST}$) am Einbauort des Wegsensors zu messen, und den Meßwert in einer Auswerte-Elektronik auf eine Normaltemperatur $T_0$, z. B. 20 °C, nach der bekannten Formel

$$s_{kompensiert} = \frac{s_{unkompensiert}}{1+m(T_{IST}-T_0)}$$

umzurechnen, wobei die Größen folgendermaßen festgelegt sind:

$s_{kompensiert}$ = temperaturkompensierter Meßwert
$s_{unkompensiert}$ = nicht temperaturkompensierter Meßwert
m = Temperaturkoeffizient des Wegsensors(Steigung der Temperaturkennlinie)
$T_{IST}$ = Sensortemperatur
$T_0$ = Normaltemperatur

Wenn zusätzlich berücksichtigt wird, daß der Temperaturkoeffizient (m) von der Ankerstellung (s) abhängt, kann der Temperaturkoeffizient (m) mit Hilfe einer 2. Funktion berechnet werden, aus der die Ankerstellungsabhängigkeit hervorgeht und die als Eingangsvariable eine temperaturbereinigte Größe verwendet; hierzu werden Iterationen benötigt.

Ein für eine Kupplung vorgesehener Wegsensor hat die Aufgabe, die Stellung der Kupplung zu ermitteln. Da die Weg-Meßwerte stark mit der Temperatur schwanken, ist für diese eine Temperaturkompensation vorzusehen, wobei sich hierfür das eingangs genannte Kompensations-Verfahren grundsätzlich eignet.

Bei einem Kupplungssensor liegt allerdings die Besonderheit vor, daß die Streuung der Weg-Meßwerte aufgrund von Temperaturschwankungen in der gleichen Größenordnung liege, wie die unvermeidlichen Weg-Toleranzen, die beim Einbau des Sensors entstehen. Diese Weg-Toleranzen können natürlich nicht mit dem eingangs genannten Temperaturkompensations-Verfahren eliminiert werden.

Der Erfindung liegt deshalb die Aufgabe zugrunde, das Sensor-Auswerteverfahren der eingangs genannten Schrift derart zu erweitern, daß es auch zur Anwendung für einen Kupplungssensor geeignet ist.

Diese Aufgabe wird durch die in dem Patentanspruch 1 angegebene Erfindung gelöst. Weiterbildungen und vorteilhafte Ausführungsbeispiele der Erfindungen sind in den Unteransprüchen angegeben.

Die Erfindung weist den Vorteil auf, daß zu ihrer Realisierung - außer einer möglicherweise erforderlichen Speicher-Erweiterung mit marginalen Kosten - keinerlei die Kosten erhöhenden Hardware-Einrichtungen vorzusehen sind, da das Sensor-Auswerteverfahren durch ein Programm realisiert wird.

Eine Weiterbildung der Erfindung hat den Vorteil, daß die erfindungsgemäße Kalibrierung nur einmal, nämlich bei der Inbetriebnahme einer (neuen) Fahrzeugkupplung durchzuführen ist.

Eine andere Weiterbildung der Erfindung ermöglicht die Einstellung des Zustandes der vollständig eingerückten Kupplung, da für eine Kupplung das vorbekannte Verfahren entsprechend der eingangs genannten Schrift nicht benutzt werden kann, weil dieses Verfahren nur auf fest vorgebbare SOLL-Positionen anwendbar ist.

Eine weitere Weiterbildung der Erfindung hat den Vorteil, daß eine Warnung an den Fahrer ausgegeben werden kann, wenn der Kupplungsbelag im Laufe des Fahrbetriebes eine bestimmte Restbelagstärke erreicht. Auf diese Weise kann eine Kupplung einerseits rechtzeitig ausgewechselt werden, damit es nicht zu einer Zerstörung der Kupplung kommt, und andererseits wird vermieden, daß nicht etwa eine Kupplung schon ausgewechselt wird, die noch eine weitere Fahrleistung von z. B. 100.000 km erbringen kann.

Entsprechend anderer Weiterbildungen besteht der Vorteil, daß die verwendeten iterativen Berechnungsverfahren zu unkritischen Zeiten durchgeführt werden, wobei das Ergebnis gespeichert wird, um in kritischen Zeiten verzögerungsfrei und ohne Rechnerbelastung zur Verfügung zu stehen.

Eine andere Weiterbildung hat den Vorteil, daß für das Schalten durch eine teil- oder vollautomatisierte Getriebeschaltung die Erkennung des Zustandes der hinreichend ausgerückten Kupplung, und zwar unabhängig vom Verschleißzustand, sehr einfach festzustellen ist.

Die Erfindung wird im folgenden anhand eines Ausführungsbeispiels, das in der Zeichnung dargestellt ist, näher erläutert.

Dabei zeigt

Fig. 1 den Verlauf des Temperaturkoeffizienten eines induktiven Wegsensors in Abhängigkeit von dem Weg;

Fig. 2 das Flußschaltbild zur Temperaturkompensation eines Sensor-Meßwertes;

Fig. 3 eine durch zwei Kalibrierpunkte festgelegte Kalibriergerade in Abhängigkeit von dem temperaturkompensierten Sensor-Meßwert;

Fig. 4 das Flußschaltbild zur Bestimmung der Kalibriergeraden;

Fig. 5 die Position des Ausrückfensters einer Kupplung bei verschiedenen Verschleißzuständen;

Fig. 6 eine Kupplung mit einer hydraulischen Ausrückeinrichtung und einem induktiven Wegsensor zur Ermittlung des Kupplungs-Betätigungsweges.

Induktive Wegsensoren sind einfach aufgebaut, sie sind damit robust und werden deshalb z. B. in Fahrzeugen häufig eingesetzt. Sie bestehen aus einer Spule, in welcher ein Eisenkern verschiebbar angeordnet ist. Die Stellung des Eisenkerns wird durch die hierdurch veränderte Induktivität der Spule ermittelt.

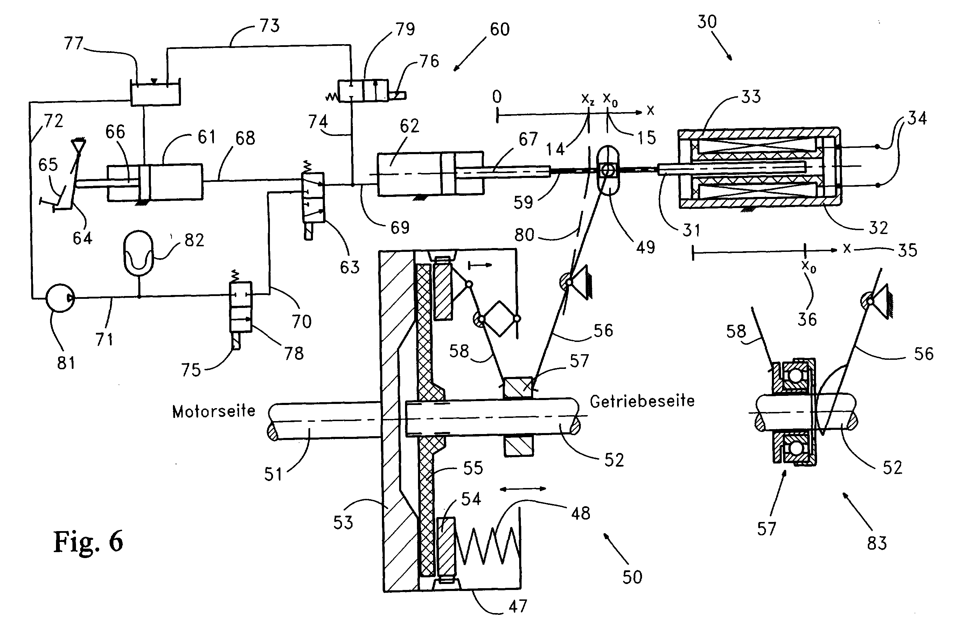

Ein derartiger induktiver Wegsensor ist in Fig. 6 unter dem Bezugszeichen (30) dargestellt. Er besteht im wesentlichen aus einem Eisenkern (31), welcher in einer Spule (32) verschiebbar angeordnet ist. Zur Rückführung des Magnetfeldes ist ein Jochtopf (33) aus ferromagnetischem Material vorgesehen. Die Spulenenden sind zu Anschlüssen (34) herausgeführt.

Der Wegsensor (30) ist ortfest am Fahrzeug befestigt und die Eintauchtiefe x (35) des Eisenkernes (31) in der Spule (32) stellt den zu messenden Weg dar.

Zur Auswertung werden die Anschlüsse (34) des Wegsensors (30) an eine nicht dargestellte elektronische Schaltung angeschlossen; eine Schaltung für eine derartige Auswerteeinrichtung ist aus der DE-OS-37 14 993 bekannt.

Die vom zu messenden Weg abhängige Induktivität (L) des Wegsensors ist dort Bestandteil einer Wheatstone'schen Brücke ($R_1$, $R_2$, $R_3$, L). Der Induktivität (L) ist ein Schalter (S) zugeordnet und die Brückenspannung wird durch einen Komparator (OP) überwacht. Ein Mikrocomputer (MC) erfaßt die Zeit (T) zwischen der Betätigung des Schalters und dem Nulldurchgang der Brückenspannung (UA). Die Zeit (T) ist proportional dem Wert der Induktivität (L), aber unabhängig von dem Wert der Versorgungsspannung ($U_E$). Durch die oben erläuterte Abhängigkeit des Weges stellt die nach dem Meßverfahren dieser elektronischen Auswerteeinrichtung bestimmte Zeit auch ein Maß für die Eintauchtiefe des Eisenkerns in der Spule dar; die Zeit ist nahezu proportional zu dem zu messenden Weg [der Einfluß von Randfeldern verhindert eine exakte Proportionalität].

Das bekannte Meßwertverfahren liefert also einen Sensor-Meßwert $t_S$, der dem vorliegenden Weg entspricht; der ermittelte Meßwert $t_S$ ist für die Temperatur $\vartheta$, bei der die Messung durchgeführt wird, gültig.

Diese Meßtemperatur $\vartheta$, die entweder die Temperatur des Wegsensors selbst oder die Temperatur in direkter Umgebung des Wegsensors darstellt, oder die einen Temperaturwert darstellt, bei dem sowohl die Wegsensor-Temperatur als auch die Umgebungstemperatur berücksichtigt ist, ist dabei durch einen Temperatursensor oder durch die Messung des temperaturabhängigen Ohm'schen Widerstandes der Spule (32) feststellbar; für das Folgende wird die Meßtemperatur $\vartheta$ als bekannt vorausgesetzt.

Da der Temperaturkoeffizient des Sensor-Meßwertes in einer Größenordnung von ca. 1‰ /°K bis ca. 3‰ /°K eine erhebliche Einflußgröße darstellt, kann der Meßwert $t_S(\vartheta)$ als solcher noch nicht zur Weiterverarbeitung verwendet werden.

Zur Weiterverarbeitung muß der Sensor-Meßwert $t_S(\vartheta)$ in einem ersten Schritt zunächst kompensiert werden, das heißt, er muß auf einen Meßwert $t_S(\vartheta_B)$ umgerechnet werden, der bei einer Bezugstemperatur $\vartheta_B$ gegeben ist. Unter Annahme eines für den Sensor geltenden Temperaturkoeffizienten $T_K$ [lineare Temperaturabhängigkeit] ergibt sich wie folgt der bekannte Zusammenhang zwischen dem Sensor-Meßwert $t_S(\vartheta)$ bei der Meßtemperatur $\vartheta$ , und dem Sensor-Meßwert $t_S(\vartheta_B)$ , dem Meßwert bei der Bezugstemperatur $\vartheta_B$:

$$t_S(\vartheta)= t_S(\vartheta_B) \cdot (1+T_K(\vartheta-\vartheta_B)) \qquad [1]$$

Zur Weiterverarbeitung erfolgt eine Auflösung nach dem Sensor-Meßwert bei der Bezugstemperatur, womit eine erste Funktion gebildet wird:

$$t_S(\vartheta_B) = \frac{t_S(\vartheta)}{1+T_K(\vartheta-\vartheta_B)} = f_1(T_K) \qquad [2]$$

Der gesuchte Wert $t_S(\vartheta_B)$ läßt sich allerdings nach Gleichung [2] noch nicht vollständig bestimmen, da auf der rechten Seite der Gleichung zwar die Temperatur $\vartheta$ der Messung, die Bezugstemperatur $\vartheta_B$ und der Sensor-Meßwert $t_S(\vartheta)$ bekannt sind, jedoch der Temperaturkoeffizient $T_K$ selbst unbekannt ist.

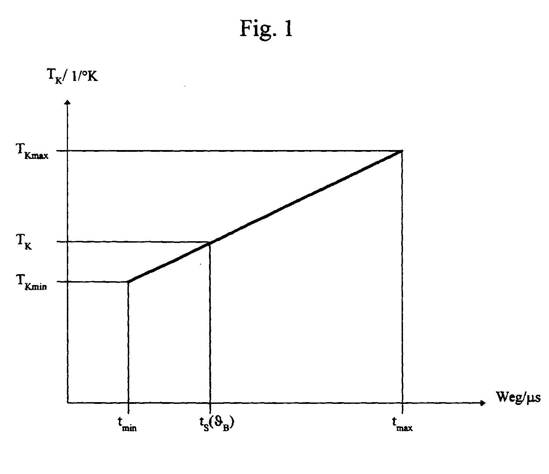

Bekannt ist jedoch die Abhängigkeit des Temperaturkoeffizienten $T_K$ vom Sensor-Meßwert bei der Bezugstemperatur $\vartheta_B$ , die in Fig. 1 dargestellt ist.

Hierbei sind:

$t_{min}$    der kleinstmögliche Sensor-Meßwert bei $\vartheta_B$
$t_{max}$    der größtmögliche Sensor-Meßwert bei $\vartheta_B$
$t_S(\vartheta_B)$    der zu bestimmende Sensor-Meßwert bei der Bezugstemperatur
$T_{Kmin}$    Temperaturkoeffizient für $t_{min}$
$T_{Kmax}$    der Temperaturkoeffizient für $t_{max}$
$T_K$    der unbekannte Temperaturkoeffizient

Für die Bezugstemperatur $\vartheta_B$, bei der die Parameter $t_{min}$ , $t_{max}$ , $T_{Kmin}$ und $T_{Kmax}$ bestimmt sind, kann grundsätzlich eine beliebige feste Temperatur gewählt sein; üblicherweise ist die Bezugstemperatur mit $\vartheta_B = 20$ °C festgelegt.

Die Kennlinie nach Fig. 1 gilt jeweils für einen bestimmten Sensortyp. Die Erfahrung zeigt, daß die Kennlinie mit guter Näherung ein Geradenstück mit konstanter Steigung M darstellt:

$$M = \frac{T_{K\,max} - T_{K\,min}}{t_{max} - t_{min}} \qquad [3]$$

Unter Zugrundelegung der bekannten Werte $t_{min}$, $t_{max}$, $T_{Kmin}$ und $T_{Kmax}$ ergibt sich ein bestimmter Zahlenwert für die Steigung M.

Angewandt auf die zwei Punkte $[T_K|t_S(\vartheta_B)]$ und $[T_{Kmin}|t_{min}]$ gilt für die Steigung M auch der Zusammenhang

$$M = \frac{T_K - T_{K\,min}}{t_S(\vartheta_B) - t_{min}} \qquad [4]$$

woraus durch Auflösung nach dem Temperaturkoeffizienten sich eine zweite Funktion ergibt:

$$T_K = M(t_S(\vartheta_B) - t_{min}) + T_{Kmin} = f_2(t_S(\vartheta_B)) \qquad [5]$$

Die Gleichungen [2] für die erste und [5] für die zweite Funktion stellen nun zwei Gleichungen für zwei Unbekannte $T_K$ und $t_S(\vartheta_B)$ dar. Die Auflösung führt zu einer quadratischen Gleichung, nach der die Unbekannten bestimmbar sind (analytische Lösung).

Bei elektronischen Steuerungen, bei denen Sensor-Meßwerte verarbeitet werden, ist in vielen Anwendungsfällen eine Wortlänge von 8 Bit (1 Byte) vorgegeben. Für diese Art von Mikro-Controllern eignet sich nicht die analytische Auflösung nach einer quadratischen Gleichung, da z. B. das damit verbundene Ziehen von Quadratwurzeln außerordentlich viel Rechenzeit benötigt.

Statt einer analytischen Auflösung der Gleichungen wird erfindungsgemäß ein anderer Weg gegangen, indem die Berechnung als Näherungsverfahren in einen Programmteil "Kompensationsberechnung" mit iterativen Schleifen erfolgt, die abgebrochen werden, wenn eine bestimmte, vorgegebene Mindestgenauigkeit erreicht ist.

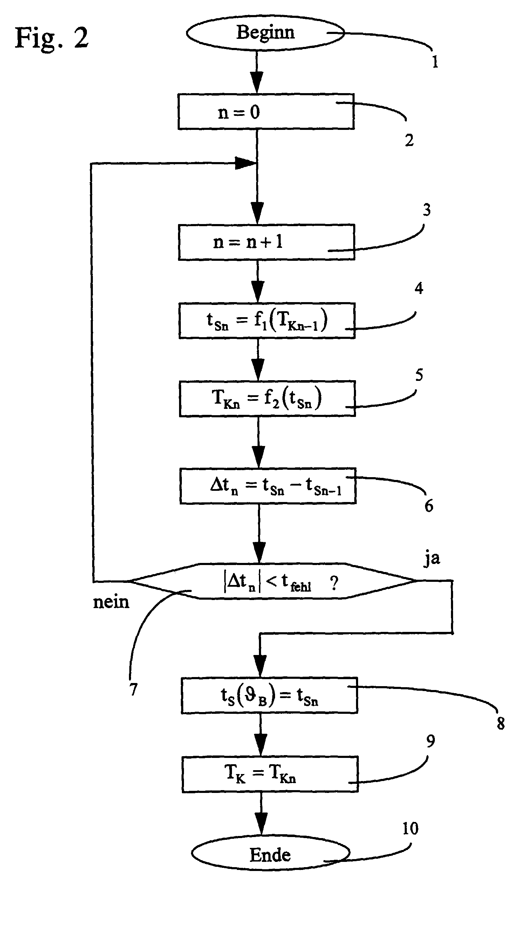

Fig. 2 zeigt ein Flußschaltbild des Programmteils "Kompensationsberechnung".

Nach dem Beginn (1) wird im Schritt (2) ein Zyklenzähler zurückgesetzt und im Schritt (3), zu dem auch der bedingte Rücksprung aus Schritt (7) führt, wird der Zyklenzähler um 1 erhöht; der Zyklenzähler enthält daher bei der ersten Schleife die Zahl 1, bei der zweiten Schleife die Zahl 2 usw.; verallgemeinert enthält er bei der n-ten Schleife die Zahl n.

Im Schritt (4) wird der Sensor-Meßwert $t_S(\vartheta)$ erstmalig verbessert, indem ein Wert $t_{Sn}$ gebildet wird. In der ersten Schleife ist es ein Wert $t_{S1}$, in der zweiten Schleife ein Wert $t_{S2}$ usw., in der Verallgemeinerung für die n-te Schleife ist es der Wert $t_{Sn}$. Die hierfür verwendete erste Funktion $f_1(T_{Kn-1})$ stellt, wie erläutert, die Funktion nach Gleichung [2] dar. Für den $T_K$-Wert wird im Schritt (4) zunächst formal derjenige Wert angesetzt, der sich in der vorhergegangenen Schleife n-1 nach dem unten erläuterten Schritt (5) ergeben hat. Da aber für den Sonderfall des ersten Schleifendurchlaufs noch kein $T_K$-Wert aus einer vorhergegangenen Schleife existiert, so wird erstmalig hier für den $T_K$ der Mittelwert aus den oben in Zusammenhang mit Fig. 1 erläuterten Temperaturkoeffizienten $T_{Kmax}$ und $T_{Kmin}$ eingesetzt [dieser Mittelwert stellt einen als geeignet angenommenen Temperaturkoeffizienten dar].

Im Schritt (5) wird der $T_{Kn}$ dieses Schleifendurchlaufes ermittelt, indem der Wert $t_{Sn}$ entsprechend Schritt (4) in die Gleichung [5], die zweite Funktion $f_2(t_{Sn})$ eingesetzt wird.

In Schritt (6) wird die Differenz $\Delta t_n$ des kompensierten Meßwertes $t_{Sn}$ entsprechend dem gerade vorliegenden und des kompensierten Meßwertes $t_{Sn-1}$ aus dem vorhergegangenen Schleifendurchlauf gebildet [für den Sonderfall des ersten Schleifendurchlaufes ist $t_{S0}$ gleich Null gesetzt]. In Schritt (7) wird überprüft, ob ein Abbruchkriterium erreicht ist, ob nämlich der Betrag der Differenz $\Delta t_n$ entsprechend Schritt (6) kleiner ist als ein vorgegebenes Minimum $t_{fehl}$ [Abbruchkriterium: Unterscheidung bezüglich der letztmaligen Berechnung um weniger als eine vorgegebene Größe]. Ist dies nicht der Fall, so erfolgt ein Rücksprung zu Schritt (3), so daß noch mindestens eine weitere Iterationsschleife durchgeführt wird. Ist nach einer Anzahl von Iterationsschleifen entsprechend Schritt (7) der maximale Fehler $t_{fehl}$ unterschritten, so werden keine weiteren Iterationsläufe durchgeführt. Statt dessen wird in Schritt (8) der Meßwert $t_S$ bei der Bezugstemperatur auf den sich in dieser Iterationsschleife ergeben habenden Wert $t_{Sn}$ gesetzt, und in Schritt (9) wird der gültige $T_K$ auf den Wert $T_{Kn}$ dieser Schleife gesetzt; mit Schritt (10) ist das Ende des Programmteils "Kompensationsberechnung" erreicht.

Ergänzend sei angemerkt, daß das Abbruchkriterium natürlich auch auf die Unterscheidung des Temperaturkoeffizienten seit seinem letztmaligen Umlauf oder auch auf die Unterscheidung von sowohl Temperaturkoeffizient als auch Meßwert angewendet werden kann.

Mit der Bildung des temperaturkompensierten Sensor-Meßwertes $t_S(\vartheta_B)$ ist der Einfluß der Temperatur eliminiert, so daß dieser Wert nur noch vom Weg abhängt.

Der Wert liegt in "counts", das heißt in Computer-Zähleinheiten vor [Zahl als Mehrfaches einer Zeiteinheit, daher normierter Zeitwert; Zeiteinheit ist z. B. 1 $\mu$s] und ist nun in einem zweiten Schritt der Weiterverarbeitung kalibrierbar, was bedeutet, daß er in eine geeignete mechanische Längeneinheit, die üblicherweise aus Millimetern besteht, umrechenbar ist. Entsprechend der hier vorliegenden linearen Beziehung wird eine Kalibriergerade bestimmt, die durch zwei Kalibrierpunkte festgelegt ist. Die Kalibriergerade gilt für ein bestimmtes Exemplar eines Sensor-Typs und ist unter Verwendung dieses Exemplars zu ermitteln.

Zur Vereinfachung der Bezeichnungsweise wird im folgenden ein nach dem Verfahren der "Kompensationsberechnung" umgerechneter Wert eines Sensor-Meßwertes $t_S$ mit einem * gekennzeichnet:

$$t_S^* = t_S(\vartheta_B) \qquad [10]$$

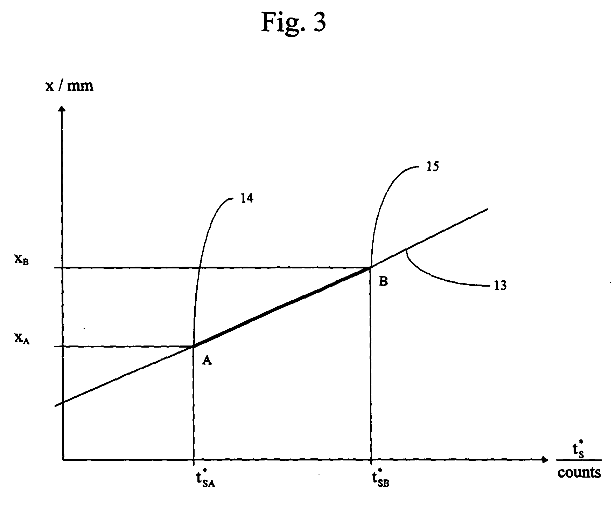

Unter dieser Vereinfachung der Schreibweise ist in Fig. 3 die Kalibriergerade (13) dargestellt, die aufgrund der genannten zwei Kalibrierpunkte, nämlich des ersten Kalibrierpunktes (14) und des zweiten Kalibrierpunktes (15) festgelegt ist. Auf der Abszisse von Fig. 3 ist als unabhängige Variable der kompensierte Meßwert $t_S^*$ aufgetragen und die abhängige Variable der Ordinate zeigt den Meßwert x in Millimetern. Mit den Koordinaten $[x_A | t_{SA}^*]$ für den ersten Kalibrierpunkt A (14) und den Koordinaten $[x_B | t_{SB}^*]$ für den zweiten Kalibrierpunkt B (15) ergibt sich für die Steigung $m_E$ der Kalibriergeraden (13):

$$m_E = \frac{x_B - x_A}{t_{SB}^* - t_{SA}^*} \qquad [11]$$

Die Kalibriergerade (13) ist somit festgelegt durch

$$x = m_E(t_S^* - t_{SA}^*) + x_A \qquad [12]$$

Der erste Kalibrierpunkt A (14) und der zweite Kalibrierpunkt B (15) sind grundsätzlich beliebig wählbar; wie unten erläutert, ist es sinnvoll, 2 ganz bestimmte Kalibrierpunkte hierfür zu bestimmen.

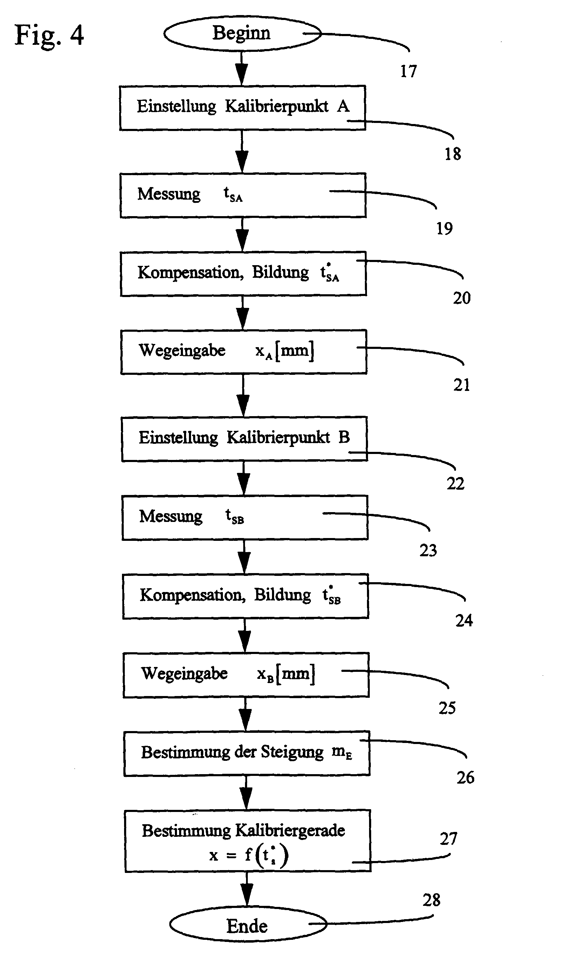

Im Flußschaltbild für die Kalibrierung nach Fig. 4 wird nach dem Beginn (17) im Schritt (18) durch geeignete Verstellung der erste Kalibrierpunkt A (14) eingestellt. Im Schritt (19) wird die Wegsensor-Messung durchgeführt, wodurch der unkompensierte Sensor-Meßwert $t_{SA}$ [bei einer Temperatur $\vartheta$] ermittelt wird. Im Schritt (20) wird dieser Meßwert nach dem erläuterten Verfahren "Kompensationsberechnung" temperaturkompensiert, was zu dem Wert $t_{SA}^*$ führt. Im Schritt (21) erfolgt die Eingabe des Wegwertes in Millimetern des ersten Kalibrierpunktes A (14); der Wert $x_A$ wird in Bezug auf den gewählten Nullpunkt in Millimetern gemessen und durch die Eingabe der elektronischen Recheneinheit mitgeteilt, die einen Teil der Auswerteeinrichtung darstellt.

Die Schritte (18) bis (21) für den ersten Kalibrierpunkt A (14) werden in den gleichartigen Schritten (22) bis (25) für den zweiten Kalibrierpunkt B (15) wiederholt. Als Ergebnis liegen mit dem Abschluß von Schritt (24) in der Recheneinheit die erläuterten Koordinaten des ersten (14) und zweiten (15) Kalibrierpunktes nach Fig. 3 fest. Im Schritt (25) wird unter Verwendung dieser Koordinaten die Steigung $m_E$ der Kalibriergeraden nach Formel [11] bestimmt, anschließend erfolgt im Schritt (26) die Festlegung der Kalibriergeraden entsprechend Formel [12]. Mit dem Schritt (28) ist die Kalibrierung abgeschlossen; die Kalibriergerade (13) nach Fig. 3 ist zahlenmäßig bestimmt: Nun kann jedem Sensor-Meßwert ein temperaturkompensierter, absoluter Weg-Meßwert in Millimetern zugeordnet werden.

Wie in Fig. 6 gezeigt, ist eine - dort sehr schematisiert dargestellte - Kupplung (50) [gezogene Bauart] üblicherweise zwischen der Abgangswelle (51) des Fahrzeugmotors und der Eingangswelle (52) des Getriebes angeordnet. Mit der Abgangswelle (51) des Motors ist formschlüssig eine erste Reibplatte (53), die z. B. mit dem Schwungrad baulich vereinigt ist, und mit der Eingangswelle des Getriebes ist drehtest aber verschieblich die Kupplungsscheibe (55) verbunden. In der als Kupplungsgehäuse ausgebildeten und mit der ersten Reibplatte (53) umlaufenden Glocke (47) ist eine zweite Reibplatte (54) gegenüber der Glocke (47) drehtest aber verschieblich aufgehängt. Die genannte Kupplungsscheibe (55) befindet sich zwischen den Reibplatten (53) und (54), sie ist mit Reibbelägen von bestimmter Gesamtdicke D [in Millimetern] ausgestattet. Im eingerückten Zustand [Kupplung zu] drückt die zweite Reibplatte (54) mit einer durch die Feder (48) vorbestimmten Kraft auf die Kupplungsscheibe (55) und die erste Reibplatte (53), so daß zwischen der Motorabgangswelle (51) und der Getriebeeingangswelle (52) ein durch Reibung gegebenes Drehmoment bestimmter Größe übertragbar ist.

Bei Betätigung des Ausrück-Mechanismus über den Ausrückhebel (56) verschiebt sich ein auf der Getriebeeingangswelle (52) verschiebbares Ausrücklager (57), an dessen einem Lagerring die inneren Hebel (58) anliegen und an dessen anderem Lagerring der Ausrückhebel (56) anliegt. Hierdurch wird die erwähnte Kraft, mit der die zweite Reibplatte (54) auf die Kupplungsscheibe (55) und auf die erste Reibplatte (53) drückt, verkleinert, so daß infolgedessen nun ein verringertes durch Reibung gegebenes Drehmoment von der Welle (51) auf die Welle (52) übertragbar ist: Die Kupplung gerät in den Schleifbereich.

So wird bei entsprechender Verschiebung des Ausrücklagers (57) die Kupplung in den Schleifbereich gebracht. Wird das Ausrücklager (57) über seine dem Schleifbereich der Kupplung entsprechende Stellung bezüglich der Darstellung von Fig. 6 weiter nach links geschoben, hebt die zweite Reibplatte (54) vom Reibbelag der Kupplungsscheibe (55) ab, so daß zwischen der Motorabgangs- und der Getriebeeingangswelle die kraftschlüssige Verbindung aufgehoben wird; die Kupplung befindet sich dann im vollständig ausgerückten Zustand (Kupplung offen]. In Fig. 6 ist dieser Zustand dargestellt.

Entsprechend diesen Ausführungen gibt es für die Kupplung einen ersten Weg-Meßwert für die geschlossene Kupplung [Kupplung zu], der ihrem eingerückten Zustand mit der Möglichkeit der Übertragung des maximalen Momentes entspricht, und einen zweiten Weg-Meßwert, der dem vollendeten Beginn des Ausrückzustandes der Kupplung entspricht [Kupplung offen], was bedeutet, daß die Kupplung so weit ausgerückt ist, daß mit Sicherheit kein Schleifen der Kupplung mehr vorliegt, und somit kein Moment übertragbar ist.

Der temperaturkompensierte Meßwert für den ersten Weg-Meßwert wird im folgenden mit $t_{SZ}^*$ und derjenige für den zweiten Weg-Meßwert mit $t_{SO}^*$ bezeichnet.

Wird dem ersten Weg-Meßwert der Weg $x_Z$ und dem zweiten Weg-Meßwert der Weg $x_O$ zugeordnet, so ergeben sich die Koordinaten dieser Zustände in einem Diagramm wie Fig. 3, in dem auf der Ordinate der Weg in Millimetern und auf der Abszisse der kompensierte Sensor-Meßwert aufgetragen ist, wie folgt:

Erster Meßwert (Kupplung zu): $[x_Z|t_{SZ}^*]$

Zweiter Meßwert (Kupplung offen) : $[x_O|t_{SO}^*]$

Für das oben erläuterte Kalibrierungsverfahren ist es sinnvoll, für den ersten Kalibrierpunkt A (14) die Koordinaten des ersten Meßwertes und für den zweiten Kalibrierpunkt B (15) die Koordinaten des zweiten Meßwertes zu wählen; mit dieser Wahl wird nach dem erläuterten Kalibrierverfahren die Kalibriergerade (13) nach Fig. 3 bestimmt.

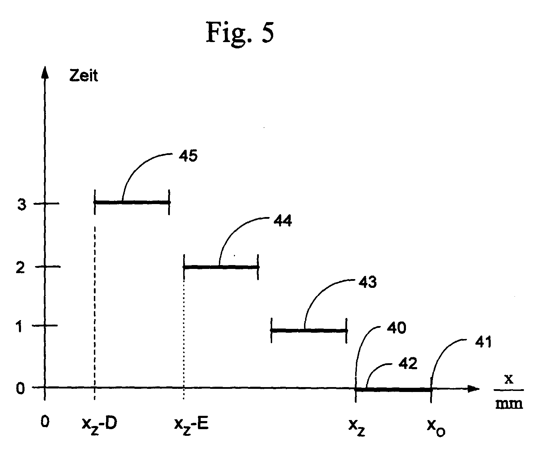

Das Ausrückfenster einer Kupplung besteht aus dem Wegbereich für die Kupplungsbetätigung, der zwischen der geschlossenen und der geöffneten Kupplung liegt, also dem Bereich zwischen dem Weg $x_Z$ [vgl. (40) in Fig. 5] und dem Weg $x_O$ [vgl. (41) in Fig. 5].

Entsprechend Formel [12] ist die Kalibriergerade (13) nach Fig. 3 dann festgelegt:

$$m_E = \frac{x_0 - x_Z}{t_{S0}^* - t_{SZ}^*} = \frac{\Delta x_A}{\Delta t_A^*} \qquad [13]$$

$$x = m_E(t_S^* - t_{SZ}^*) + x_Z \qquad [14]$$

In Formel [13] stellt die Größe $\Delta x_A$ die durch die Konstruktion von Kupplung und Ausrückmechanismus bestimmte Wegbreite des Ausrückfensters in Millimetern dar und die Größe $\Delta t_A^*$ beschreibt diese Wegbreite als temperaturkompensierten normierten Zeitwert.

In Fig. 5 ist das Ausrückfenster bei verschiedenen Verschleißzuständen dargestellt; auf der Abszisse ist der Betätigungsweg x in Millimetern und auf der Ordinate sind vier diskrete, den Verschleißzustand der Kupplung bestimmende Zeitwerte, die Werte 0, 1, 2 und 3 aufgetragen.

Für die Zeit 0 [die Abszisse] liegt der Einbauzustand vor. Wie bereits erwähnt, liegt das Ausrückfenster (42) zwischen den Wegen (40) und (41).

In der Darstellung zeigt die geschlossene Kupplung (40) einen kleineren Weg als die geöffnete Kupplung (41). Dies entspricht, wie weiter unten ausgeführt, der Art der Montage des Wegsensors nach Fig. 6. Bei dem Ausrückfenster (42) des Einbauzustandes sind u. A. auch die Einbautoleranzen, die einige Millimeter betragen können, berücksichtigt.

Beim Betrieb einer Kupplung wird durch die Schleifvorgänge der Kupplungsbelag abrasiv abgetragen, d. h. die Dicke des Kupplungsbelages nimmt ab, wobei die Abnahme der Belagdicke in weiten Grenzen die Funktion der Kupplung zunächst nicht wesentlich beeinflußt.

Erst wenn die Dicke des Kupplungsbelages sehr klein geworden ist, führt dies zum Ausfall einer Kupplung, was zu vermeiden ist.

Wenn nämlich - extrem formuliert - der Kupplungsbelag zu Null geworden ist, ist zwischen erster und zweiter Reibplatte kein Belag mehr vorhanden, "Metall reibt auf Metall" und ein Moment ist vom Motor zum Getriebe nicht mehr übertragbar. Die Gefahr eines solchen Zustandes gilt es sicher im voraus zu erkennen, so daß die Kupplung rechtzeitig ausgetauscht werden kann; andererseits soll aus Kostengründen die mögliche Laufzeit einer Kupplung durch zu frühen Austausch nicht unnötig verringert werden.

Die Erfindung bietet hier die Möglichkeit, dem Fahrer eine Information über einen erforderlichen Kupplungsaustausch zu geben, der sich an der verbleibenden Belagstärke (diese entspricht der Restlaufzeit der Kupplung] orientieren.

In der Darstellung von Fig. 5 verschiebt sich das Ausrückfenster mit steigendem Verschleiß zu geringeren Abszissenwerten; so gilt für die Zeit 1 das Ausrückfenster (43) und für die Zeit 2 das Ausrückfenster (44). Für die Zeit 3 ist das Ausrückfenster (45) um insgesamt den Wert D, d. h. die ursprüngliche Belagstärke nach links verschoben: In diesem Zustand ist die Belagstärke zu Null geworden und die Kupplung ist vollständig verschlissen.

Mit der Verschiebung des Ausrückfensters (45) stellt sich so der Weg x für den Zustand der geschlossenen Kupplung ein:

$$x = x_Z - D \qquad [15]$$

Diesem Weg soll der kompensierte Sensor-Meßwert $t_{S\,V}^*$ entsprechen. Mit dieser Festlegung und den Gleichungen [14] und [15] ergibt sich:

$$x_Z - D = m_E(t_{SV}^* - t_{SZ}^*) + x_Z \qquad [16]$$

$$t_{SV}^* = t_{SZ}^* - \frac{D}{m_E}$$

Eine Warnung an den Fahrer soll erfolgen, wenn das Ausrückfenster sich verschleißbedingt um einen Wert E, der kleiner ist als die ursprüngliche Belagstärke D, verschoben hat. Die Restbelagstärke beträgt dann D-E , wobei entsprechend dem Kupplungstyp ein geeigneter Wert E gewählt wird.

Der kompensierte Sensor-Meßwert für den Zustand der geschlossenen Kupplung, bei dem eine Warnung für den Fahrer ausgegeben wird, sei $t^*_{SW}$. Eine Warnung an den Fahrer wird dann ausgegeben, wenn $t^*_{SW}$ den folgenden Wert annimmt (Ableitung vgl. Formel [15]):

$$t^*_{SW} = t^*_{SZ} - \frac{E}{m_E} \qquad [17]$$

Der Verschleiß-Warnwert $t^*_{SW}$ wird für die spätere Anwendung im Fahrbetrieb abgespeichert.

Wie unten erläutert, wird der Verschleiß-Warnwert $t^*_{SW}$ im Fahrbetrieb größenmäßig mit einem Wert $t^*_1$ verglichen, der den Wegmeßwert für die geschlossene Kupplung darstellt.

Die Betätigung einer Kupplung kann in unterschiedlicher Art und Weise und unter Verwendung unterschiedlicher Technologien erfolgen. So kann eine Kupplung durch die Fahrer-Fußkraft, üblicherweise mit Hilfe eines Fußpedals, betätigt werden, oder sie kann als fremdkraftbetätigte Kupplung ausgeführt sein.

Technologisch gibt es sehr unterschiedliche Betätigungseinrichtungen, z. B. mechanische, hydraulische [im Falle der Fußkraft-Betätigung mit oder ohne Servo-Unterstützung] sowie pneumatische und elektromotorische Ausführungsformen.

Die Art und Weise, wie zur Durchführung der vorstehend erläuterten Kalibrierung der erste und der zweite Meßwert für die beiden Kalibrierpunkte A und B eingestellt werden, wird grundsätzlich am Beispiel einer hydraulischen Ausrück-Betätigungseinrichtung erläutert. Das Verfahren läßt sich auf alle anderen Arten von Betätigungseinrichtungen einer Kupplung anwenden, so daß, von Spezialfällen abgesehen, jede Kupplung eines Fahrzeuges in der nachfolgend erläuterten Art zu kalibrieren ist.

Die gezeigte hydraulische Betätigungseinrichtung (60) ist alternativ als fußkraft- oder fremdkraftbetätigte Einrichtung betreibbar; hierzu ist ein hydraulisches Umschalt-Magnetventil (63) vorgesehen, bei dem in der gezeigten, unbetätigten Grundstellung die Fußkraftbetätigung wirksam ist.

Bei der Fußkraftbetätigung wird als Folge einer durch das Fußpedal (64) [Fußpedal (64) in betätigter Stellung im Gegensatz zur unbetätigten, gestrichelt gezeichneten Stellung (65)] verursachten Verschiebung der Kolbenstange (66) des Geberzylinders (61) Hydraulikflüssigkeit über die Hydraulikleitung (68), das Ventil (63) und die Hydraulikleitung (69) zum Nehmerzylinder (62) übertragen, was zur Folge hat, daß die Kolbenstange (67) des Nehmerzylinders (62) ebenfalls verschoben wird [hydrostatisches Gestänge] .

Der Tank (77) wirkt bei dieser Vorrichtung als Nachtüllbehälter.

Die Kolbenstange (67) ist an ihrem freien Ende formschlüssig mit dem ersten Ende einer Betätigungsstange (59) verbunden, welche an ihrem zweiten Ende formschlüssig mit dem Eisenkern (31) des Wegsensors verbunden ist.

An einer geeigneten Stelle der Betätigungsstange (59) ist ein Drehschiebegelenk (49) vorgesehen, das zur Verstellung des Ausrückhebels (56) und damit der Kupplung (50) dient: Mit der oben erläuterten Verschiebung der Kolbenstange (67) als Folge einer Betätigung des Fußpedals (64) verschiebt sich auch die Betätigungsstange (59) mit dem Gelenk (49), und der Ausrückhebel (56) wird infolgedessen rechtsdrehend verschwenkt, wodurch der Ausrückmechanismus die Kupplung (50) weiter öffnet.

Zur Messung des Verschiebungs-Weges eignet sich besonders der Mittelpunkt des Gelenkes (49). Bezüglich dieses Punktes sind in Fig. 6 auf einer Achse x auch die Wege $x_Z$ des ersten Kalibrierpunktes (14) und $x_O$ des zweiten Kalibrierpunktes (15) eingetragen; auf die Einstellung dieser Kalibrierpunkte wird weiter unten eingegangen.

Es soll in Fig. 6 eine Grundstellung $x_Z$ der Mitte des Gelenkes (49) dem vollendeten Beginn des Zustands "Kupplung geschlossen" entsprechen, wie er beim Einrücken der Kupplung von Stellungen dieses Gelenkes (49) her kommend erreicht wird, die in Fig. 6 weiter rechts liegenden, dem Schielt zustand der Kupplung bzw. deren Zustand "Kupplung offen" entsprechen.

Diese Grundstellung $x_Z$ der Mitte des Gelenkes (49) wird, ausgehend von [in Fig. 6] nach rechts weisender positiver Richtung der Achse x der Koordinaten der Mitte des Gelenkes (49), durch größere Werte $x_Z$ bei unverschlissenen Kupplungs-Reibbelägen bzw. durch kleinere Werte $x_Z$ bei verschlissenen Reibbelägen gekennzeichnet sein. Die Stellung $x_O$ der Mitte des Gelenkes (49), wie sie ausgehend von der Grundstellung $x_Z$ durch Betätigung des Pedales (64) [in Fig. 6 im Sinne einer Linksdrehung] erreicht wird, entspricht dem vollendeten Beginn des Zustandes "Kupplung offen". Dieser Stellung $x_O$, entspricht eine größere Eintauchtiefe des Eisenkerns (31) in der Spule (32) des Wegsensors (30) als die Stellung $x_Z$.

Für die Fremdkraftbetätigung wird das Ventil (63) umgeschaltet, indem der Magnet dieses Ventils bestromt wird. In diesem Zustand wird der Nehmerzylinder (62) dadurch betätigt, daß durch Betätigung eines Ausrück-Magnetventiles (78) Hydraulikflüssigkeit in den Nehmerzylinder (62) eingespeist wird, wobei diese Flüssigkeit die Hydraulikleitung (70), das Ventil (63) und die Hydraulikleitung (69) durchströmt. Das Ausrückventil (78) ist als taktendes 2/2-Wegeventil ausgebildet. Dem Ausrückventil (78) wird mit Hilfe der Hydraulikpumpe (81) über die Hydraulikleitung (71) unter Mitwirkung des Hydrospeichers (82) Hydraulikflüssigkeit zugeführt. Die Hydraulikpumpe (81) wird dabei über die vom Tank (77) her kommende Hydraulikleitung (72) versorgt.

Wird der Magnet (75) des Ausrückventiles (78) über eine Zeit $\Delta t$ bestromt, so fließt eine bestimmte Menge Hydraulikflüssigkeit $\Delta V$, die abhängig ist von dem Förderverhalten der Hydraulikpumpe (81), sowie den Strömungswiderständen aufgrund der Öffnungsquerschnitte der Ventile und der Leitungen, in den Zylinderraum des Nehmerzylinders (62). Durch diese Vergrößerung des Zylinderraumes wird der Kolben des Nehmerzylinders um ein Weg-Inkrement $\Delta x$ ausgefahren; mit einer Kolbenfläche $A_z$ ergibt sich dieses Weg-Inkrement zu

$$\Delta x = \frac{\Delta V}{A_z} \ .$$

Durch Anlegen eines Pulses bestimmter Länge an den Magneten des Ausrückventiles (78) kann also die Betätigungsstange (59) um einen bestimmten Weg ausgefahren werden [Ausfahren bedeutet Vergrößerung des Weges x, die Kupplung wird hierdurch weiter geöffnet].

Möchte man die Betätigungsstange mit einer bestimmten Geschwindigkeit ausfahren, so muß, wie dies für jede Art von getakteter Betriebsweise eines Ventils bekannt ist, an den Magneten des Ausrückventiles (78) ein periodisches Betätigungssignal mit einem bestimmten Verhältnis zwischen einer Puls- und einer Pausenzeit gewählt werden, das sich nach der gewünschten Verfahrgeschwindigkeit ergibt.

Bei der Fremdkraftbetätigung der Kupplung (50) erfolgt das Einrücken durch das taktende Einrück-Magnetventil (79) mit 2/2 Wegen. Wird der Magnet (76) des Einrückventiles (79) bestromt, so schaltet dieses Ventil in Durchlaßstellung um und Hydraulikflüssigkeit wird vom Zylinderraum des Nehmerzylinders (62) über die Hydraulikleitungen (69, 74), das Ventil (79) und über die Hydraulikleitung (73) zum Tank (77) übertragen, wobei die Betätigungsstange (59) eingefahren und mithin die kleineren Werte x der Stellung der Mitte des Gelenkes (40) erreicht werden. Hierbei wird der Kolben des Nehmerzylinders (62) durch eine [in Fig. 6] nach links gerichtete Kraft nach links verschoben, welche der Ausrückhebel (56) im Gelenk (49) über die Betätigungsstange (59) auf die Kolbenstange (67) ausübt, wobei auf den Ausrückhebel (56) durch das Ausrücklager (57) eine [in Fig. 6] nach rechts gerichtete Kraft infolge der Federwirkung der Kupplung ausgeübt wird. Auch hier kann der Weg durch bestimmte Weg-Inkremente verringert werden oder es kann eine bestimmte Verfahrgeschwindigkeit eingestellt werden; für das Einrückventil (79) gelten sinngemäß die obigen, diesbezüglichen Aussagen für das Ausrückventil (78).

Für das Folgende wird zunächst angenommen, daß die Kupplung fußkraftbetätigt ist, d. h., daß sich das Umschaltventil (63) in seiner Grundstellung befindet. Wie erwähnt, ist das Fahrpedal (64) in einer betätigten Stellung gezeigt, bei der die Kupplung ausgerückt ist. Entsprechend dem oben erläuterten Vorgehen, die Kupplung so weit zu öffnen, daß sie gerade nicht mehr schleift, ist hier die Betätigung so gewählt, daß der Weg "Kupplung offen" $x_O$ eingestellt ist, welcher dem zweiten Meßwert $t_{SO}^*$ entspricht; der zweite Kalibrierpunkt B (15) ist damit festgelegt. Einer der beiden Kalibrierpunkte, die, wie oben erläutert, zur Bestimmung der Kalibriergeraden (13) erforderlich sind, wird durch die so gewählte Betätigung angefahren [vgl. Schritt (22) in Fig. 4].

Der andere Kalibrierpunkt, nämlich der erste Kalibrierpunkt A (14) wird angefahren [vgl. Schritt (18) in Fig. 4], indem die Betätigungseinrichtung (60) in den energielosen Zustand übergeführt wird. Dies geschieht, indem der Fahrer das Fußpedal freigibt. Mit der Freigabe stellt sich aufgrund der erläuterten Federwirkung der Kupplung der Weg "Kupplung zu" $x_Z$ ein, welcher dem ersten Meßwert $t_{SZ}^*$ entspricht, womit auch der erste Kalibrierpunkt A (14) festgelegt ist.

Mit den beiden Kalibrierpunkten wird, wie oben erläutert, die Kalibriergerade bestimmt. Es sei an dieser Stelle darauf hingewiesen, daß die Kalibrierung natürlich zusammen mit der Inbetriebnahme einer Kupplung mit dem dort vorliegenden Einbauzustand erfolgt. Der auf diese Weise erstmalig ermittelte Wert $t_{SZ}^*$ bestimmt die Kalibriergerade und damit auch den Wert $t_{SW}^*$ nach Formel [17], bei dem eine Verschleiß-Warnung an den Fahrer ausgegeben wird.

Nach dem Auswechseln einer Kupplung wird die Kalibrierung erneut durchgeführt; die Kalibrier-Gerade entspricht dann dem Einbauzustand der neu eingebauten Kupplung.

Der die Eintauchtiefe des Eisenkerns (31) in die Spule (32) darstellende Weg x ist durch den Verschiebungs-Weg der freien Kante des Eisenkerns in die Spule bestimmt. Durch die starre Anordnung von Kolbenstange (67), Betätigungsstange (59) und Eisenkern (31) tritt dieser Verschiebungs-Weg an jeder Stelle dieser Anordnung auf; er kann so auch an jeder Stelle zur Eingabe an die elektronische Recheneinheit im Rahmen der vorstehend erläuterten Kalibrierung gemessen werden.

Unter dem Bezugszeichen (80) ist gestrichelt die Schwenkstellung des linksgedrehten Ausrückhebels (56), wie er sich aufgrund der erläuterten Fußpedal-Freigabe einstellt, dargestellt [nicht maßstäblich, stark übertriebene Drehung, um das Grundsätzliche zu zeigen]. Mit der in Fig. 6 gestrichelt dargestellten, nach Linksdrehung des Ausrückhebels (56) erreichten Stellung (80) ist auch die Stellung $x_Z$ der Mitte des Gelenkes (49) bestimmt, durch die der vollendete Beginn des Einrückzustandes der Kupplung [Kupplung zu] gekennzeichnet ist.

Bei der Variante der fremdkraftbetätigten Kupplung ist, wie oben erläutert, das Umschaltventil (63) in seiner betätigten Stellung. Das Anfahren des zweiten Meßwertes für den zweiten Kalibrierpunkt B (15) erfolgt, indem man die Kupplung über das Ausrückventil (78) in einem Umfang ausrückt, wie dies vorstehend erläutert ist; der zweite Meßpunkt für den zweiten Kalibrierpunkt B (15) ist damit festgelegt.

Zur Einstellung des ersten Kalibrierpunktes A (14) wird, wie auch im fußkraftbetätigten Fall, die Betätigungseinrichtung in den energielosen Zustand versetzt, was nun aber ventilgesteuert erfolgt: Das Einrückventil (79) wird geöffnet, d. h. der Magnet (76) wird durch ein statisches Signal bestromt.

Mit der Öffnung des Einrückventiles (79) wird Hydraulikflüssigkeit aus dem Zylindervolumen des Nehmerzylinders (62) in den Tank geleitet, während, wie in der vorstehend beschriebenen Weise, durch die Wirkung der Feder (48) und des Ausrückgestänges die Betätigungsstange (59) so weit zurückgeschoben wird, daß ihre Stellung dem Zustand der eingerückten Kupplung entspricht. Damit ist der erste Meßwert für den ersten Kalibrierpunkt A (14) bestimmt.

Die beschriebene Einstellung läßt sich auch auf andere Arten der Kupplungsbetätigung anwenden. Wesentlich ist, daß für den ersten Meßpunkt [Kalibrierpunkt A] die Betätigungseinrichtung in den energielosen Zustand versetzt ist und für den zweiten Meßpunkt [Kalibrierpunkt B] die Kupplung in einem Umfang, wie vorstehend erläutert, geöffnet wird.

In einem bestimmten Anwendungsfall liegen die folgenden mechanischen Maße und Toleranzen vor:

| | |
|---|---|
| Meßbereich Wegsensor (30 | : 85 mm |
| Einbautoleranz Wegsensor (30) | : 14 mm |
| Ausrückfenster (Wegdifferenz $x_O$-$x_Z$) | : 13 mm |
| Kupplungsbelag-Gesamtdicke D | : 12 mm |

Der minimale Betätigungshub um die geschlossene Kupplung sicher zu öffnen ist gleich der Wegdifferenz des Ausrückfensters, und dieses stellt nur einen vergleichsweise kleinen Teil des gesamten Meßbereiches des Wegsensors dar. Die Einbautoleranz des Wegsensors ist in seiner Größe vergleichbar zur Größe des Ausrückfensters, wodurch die Einbautoleranz eine vergleichsweise große Einflußgröße darstellt. Durch die erläuterte Kalibrierung entsprechend der Erfindung wird jedoch, wie bereits erwähnt, diese erhebliche Einflußgröße eliminiert.

Die Kupplungsbelag-Gesamtdicke D ist in seiner Größe ebenfalls ähnlich der Größe des Ausrückfensters.

Wenn der Anwender für die Überwachung des Verschleißzustandes bezogen auf diesen Anwendungsfall z. B. eine Verschleiß-Warnung wünscht, wenn sich der Kupplungsbelag von seiner Gesamtstärke von 12 mm um 8 mm auf 4 mm reduziert hat, so setzt er zur Bestimmung des Verschleiß-Warnwertes $t_{SW}^*$ in die Gleichung [17] den Wert E = 8 mm ein. Dies erfolgt direkt im Anschluß an die Kalibrierung.

Der Verschleißzustand der Kupplung wird dann im Fahrbetrieb kontinuierlich überwacht. Hierzu wird irgendein geeigneter Zeitpunkt gewählt, bei dem die Kupplung eingerückt ist [Kupplung zu]. Wie vorstehend erläutert, ist der Zustand der eingerückten Kupplung immer bei energieloser Betätigungseinrichtung gegeben; wie ebenfalls erläutert, ist dies im Falle einer Fahrerbetätigten Kupplung bei freigegebenem Kupplungspedal erreicht.

Da sich die Betätigungseinrichtung ganz überwiegend die meiste Zeit im energielosen Zustand befindet, erfolgt eine Messung für den Verschleißzustand zu nicht kritischen Zeiten, in denen die Auswerteeinrichtung nicht mit zeitkritischen Aufgaben befaßt ist.

Bei dem gewählten Zeitpunkt [alternativ ist ein kontinuierliches Messen im Hintergrund bei eingerückter Kupplung] wird die Eintauchtiefe des Eisenkernes (31) in der Spule (32) gemessen, was zunächst einen Meßwert $t_1$ ergibt, der für die Temperatur $\vartheta$ gilt.

Dieser Meßwert $t_1$ wird nach dem erläuterten Kompensationsverfahren temperaturkompensiert, wodurch sich der Wert $t_1^*$ [$t_1(\vartheta_B)$] ergibt.

Die Auswerteeinrichtung vergleicht diesen Wert $t_1^*$ mit dem Verschleiß-Warnwert $t_{SW}^*$ nach Gleichung [17] und generiert eine Verschleißwarnung an den Fahrer, wenn der Wert $t_{SW}^*$ erreicht oder sogar unterschritten wird:

$$t_1^* \leq t_{SW}^* \qquad [18]$$

Neben der Aufgabe der Verschleißerkennung kann der Kupplungssensor auch zur Erkennung des ausgerückten Zustandes für ein teil- oder ein vollautomatisiertes Getriebe benutzt werden.

Hierzu wird von dem temperaturkompensierten Meßwert $t_1^*$ ausgegangen, der, wie vorstehend erläutert, für die eingerückte Kupplung [Kupplung zu] für einen bestimmten Verschleißzustand gilt. Entsprechend Formel [14] entspricht diesem Meßwert ein Weg $x_1$:

$$x_1 = m_E(t_1^* - t_{SZ}^*) + x_Z \qquad [19]$$

Die Bedingung für die ausgerückte Kupplung ist dadurch gegeben, daß sich ein Wert $x_2$ einstellt, der in Bezug auf den Wert $x_1$ um die Weg-Breite $\Delta x_A$ des Ausrückfensters vergrößert ist:

$$x_2 = x_1 + \Delta x_A \qquad [20]$$

Durch Einsetzen der Beziehung nach Formel [13] in Formel [20] erhält man

$$x_2 = m_E(t_1 - t_{SZ}) + x_Z + \Delta t_A^*$$
$$= m_E(t_1^* + \Delta t_A^* - t_{SZ}^*) + x_Z \qquad [21]$$

Damit erhält man den temperaturkompensierten Sensor-Meßwert $t_2^*$ für den Zustand der hinreichend ausgerückten Kupplung [entspricht dem oben erläuterten vollendeten Beginn des Ausrückzustandes] als Summen-Meßwert, der als Vergleichswert zur Ermittlung dieses Zustandes dient:

$$t_2^* = t_1^* + \Delta t_A^* \qquad [23]$$

Wenn also von einer Getriebesteuerung für ein teil- oder vollautomatisches Getriebe ein Schaltwunsch angemeldet ist, so wird die Auswerteeinrichtung in kurzen Abständen den Weg am Sensor messen und mit dem Meßwert $t_2^*$ nach Formel [23] vergleichen. Sobald dieser Wert erreicht ist, wird von der Auswerteeinrichtung die Information "Kupplung offen" an die Getriebesteuerung weitergeleitet, damit die Schaltung durchgeführt werden kann.

Wie erläutert, wird bei einem Schaltwunsch der Sensor in vergleichsweise kurzen Zeitabständen abgefragt. Um zu einer Entscheidung über die ausgerückte Kupplung zu kommen, sind kurze Rechenzeiten erforderlich und in diesem Falle wäre die Durchführung der Temperaturkompensation auf iterativer Basis zu zeitaufwendig.

In diesem Fall kann auf die Iteration verzichtet werden, da die Wege $x_2$ und $x_1$ im Vergleich zu dem gesamten Weg-Meßbereich eng benachbart sind und somit der Temperarturkoeffizient, der für den Weg $x_1$ [Kupplung zu] auf iterative Weise ermittelt worden ist, mit guter Näherung auch für den Weg $x_2$ [Kupplung offen] verwendet werden kann. Zur Umrechnung des unkompensierten Meßwertes $t_2(\vartheta)$ in den temperaturkompensierten Meßwert $t_2^*$ wird der Wert $T_{kn}$ benutzt, der bei der vorhergehenden iterativen Berechnung als Näherungswert für den Sensor-Meßwert $t_1^*$ ermittelt worden ist [vgl. Fig. 2, Schritt (5)]; dieser Temperaturkoeffizient wurde wie erläutert zu nicht kritischen Zeiten ermittelt, er wurde abgespeichert und steht für die nun zeitkritische Umrechnung zur Verfügung. Unter Verwendung dieses Temperaturkoeffizienten ergibt sich der temperaturkompensierte Summen-Meßwert $t_2^*$ zu:

$$t_2^* = \frac{t_2}{1 + T_{Kn}(\vartheta - \vartheta_B)} \approx t_2(1 - T_{Kn}(\vartheta - \vartheta_B)) \qquad [24]$$

**Patentansprüche**

1. Verfahren zur Ermittlung des temperaturkompensierten Meßwertes und zur Kalibrierung eines Wegsensors mit folgenden Merkmalen:

    a) es ist ein Wegsensor vorgesehen, der als induktiver Wegsensor ausgebildet ist;

    b) es wird eine Meßtemperatur ermittelt, die aus der bei einer Messung vorliegenden Temperatur des Wegesensors und/oder dessen Umgebungstemperatur besteht;

    c) es wird ein bei der Meßtemperatur gültiger Sensor-Meßwert ermittelt;

    d) der Sensor-Meßwert wird temperaturkompensiert, indem dieser unter Verwendung eines für den Sensor geltenden Temperaturkoeffizienten und der Temperaturdifferenz zwischen der Meßtemperatur und einer Bezugstemperatur auf den bei der Bezugstemperatur gültigen Sensor-Meßwert umgewandelt wird;

    e) Die Bestimmung des zunächst unbekannten Temperaturkoeffizienten erfolgt unter Verwendung von zwei Funktionen;

    f) die erste Funktion basiert auf der Temperatur-Abhängigkeit des Sensor-Meßwertes;

    g) die zweite Funktion basiert auf der bezogen auf einen Sensortyp bekannten Abhängigkeit des Sensor-Temperaturkoeffizienten bei der Bezugstemperatur vom Sensor-Meßwert;

    h) zur Lösung der zwei Funktionen wird ein iteratives Verfahren angewendet;

    i) ein temperaturkompensierter Sensor-Meßwert wird durch Kalibrierung in einen Meßwert mit einer mechanischen Längeneinheit umgerechnet.

2. Verfahren nach Anspruch 1, gekennzeichnet durch die folgenden Merkmale:

    a) Die erste Funktion wird festgelegt, indem der mathematische Zusammenhang der Temperatur-Abhängigkeit des Sensor-Meßwertes nach dem Sensor-Meßwert bei der Bezugstemperatur aufgelöst wird;

    b) die zweite Funktion wird festgelegt, indem der mathematische Zusammenhang der Abhängigkeit des Sensor-Temperaturkoeffizienten vom Sensor-Meßwert nach dem Temperaturkoeffizienten aufgelöst wird.

3. Verfahren nach Anspruch 2, gekennzeichnet durch die folgenden Merkmale:

    a) es wird erstmalig ein geeigneter Temperaturkoeffizient angenommen und in die erste Funktion eingesetzt;

    b) das Ergebnis der Berechnung nach der ersten Funktion, ein Sensor-Meßwert, wird in die zweite Funktion eingesetzt, was zu einem verbesserten Temperaturkoeffizienten führt;

c) in einer Folge von Schritten wird jeweils das Ergebnis der Berechnung nach der ersten Funktion in die zweite Funktion und das Ergebnis der Berechnung nach der zweiten Funktion in die erste Funktion eingesetzt, bis ein Abbruchkriterium erreicht ist;

d) das Abbruchkriterium ist gegeben, wenn sich ein Ergebnis aus einer Berechnung nach der zweiten Funktion und/oder ein Ergebnis nach der ersten Funktion seit seiner letztmaligen Berechnung um weniger als eine vorgegebene Größe unterscheidet.

4. Verfahren nach mindestens einem der Ansprüche 1 oder 3, dadurch gekennzeichnet, daß zur Kalibrierung eine Kalibriergerade verwendet wird, die durch einen ersten und einen zweiten Kalibrierpunkt festgelegt ist.

5. Verfahren nach Anspruch 4, dadurch gekennzeichnet, daß der Wegsensor zur Messung des Verschiebungs-Weges einer Ausrück-Betätigungseinrichtung für eine Fahrzeugkupplung vorgesehen ist.

6. Verfahren nach Anspruch 5, gekennzeichnet durch die folgenden Merkmale:

a) die Kalibrierung wird mit der Inbetriebnahme einer Fahrzeugkupplung vorgenommen;

b) der erste Kalibrierpunkt wird durch den Verschiebungs-Weg für die vollständig eingerückte Kupplung festgelegt;

c) der zweite Kalibrierpunkt wird durch den Verschiebungs-Weg für den Beginn der vollendet ausgerückten Kupplung festgelegt.

7. Verfahren nach Anspruch 6, dadurch gekennzeichnet, daß der Zustand der vollständig eingerückten Kupplung eingestellt wird, indem die Ausrück-Betätigungseinrichtung in den energielosen Zustand versetzt wird.

8. Verfahren nach Anspruch 7, dadurch gekennzeichnet, daß im Fahrbetrieb ein sich verschleißabhängig verändernder Verschiebungs-Weg für die vollständig eingerückte Kupplung bestimmt wird.

9. Verfahren nach Anspruch 8, dadurch gekennzeichnet, daß ein Verschleiß-Warnwert als derjenige Verschiebungs-Weg bestimmt wird, bei dem der Kupplungsbelag eine bestimmte Restbelagstärke aufweist.

10. Verfahren nach Anspruch 9, dadurch gekennzeichnet, daß eine Verschleiß-Warnung an den Fahrer ausgelöst wird, wenn der sich verschleißabhängig verändernde Verschiebungs-Weg für die vollständig eingerückte Kupplung den Verschleiß-Warnwert zumindest erreicht oder unterschreitet.

11. Verfahren nach einem der Ansprüche 1 bis 3, dadurch gekennzeichnet, daß für einen Sensor-Meßwert, der sich in Bezug auf den gesamten Meßbereich in einem vergleichsweise kleinen Abstand zu einem anderen Sensor-Meßwert befindet, auf die Durchführung des iterativen Verfahrens zur Bestimmung des Temperaturkoeffizienten bei der Meßtemperatur verzichtet wird, und stattdessen der bekannte Temperaturkoeffizient des anderen Sensor-Meßwertes verwendet wird.

12. Verfahren nach einem der vorstehenden Ansprüche, dadurch gekennzeichnet, daß die Bestimmung des für den Sensor-Weg geltenden Temperaturkoeffizienten bei der Meßtemperatur zu nicht kritischen Zeiten durchgeführt wird.

13. Verfahren nach Anspruch 12, dadurch gekennzeichnet, daß der zu nicht kritischen Zeiten bestimmte Temperaturkoeffizient in einem Speicher abgespeichert wird, um dort für zeitkritische Berechnungen zur Verfügung zu stehen.

14. Verfahren nach einem der vorstehenden Ansprüche, dadurch gekennzeichnet, daß als Vergleichswert zur Ermittlung des Zustandes der hinreichend ausgerückten Kupplung ein Summen-Meßwert aus dem temperaturkompensierten Sensor-Meßwert für die eingerückte Kupplung und der Wegbreite des Ausrückfensters als temperaturkompensierten und normierten Zeitwert gebildet wird.

15. Verfahren nach Anspruch 14, dadurch gekennzeichnet, daß zur Temperaturkompensation des Summen-Meßwertes der Temperaturkoeffizient des Sensor-Meßwertes für die eingerückte Kupplung verwendet wird.

# Fig. 1

Fig. 2

$$\boxed{\text{Beginn}} \quad 1$$

$$\boxed{n = 0} \quad 2$$

$$\boxed{n = n + 1} \quad 3$$

$$\boxed{t_{Sn} = f_1\left(T_{Kn-1}\right)} \quad 4$$

$$\boxed{T_{Kn} = f_2\left(t_{Sn}\right)} \quad 5$$

$$\boxed{\Delta t_n = t_{Sn} - t_{Sn-1}} \quad 6$$

$$|\Delta t_n| < t_{fehl} \quad ? \qquad \text{ja}$$

nein

7

$$\boxed{t_S(\vartheta_B) = t_{Sn}} \quad 8$$

$$\boxed{T_K = T_{Kn}} \quad 9$$

$$\boxed{\text{Ende}} \quad 10$$

# Fig. 3

**Fig. 4**

```
                    ┌─────────────┐
                    │   Beginn    │ ──────────┐
                    └─────────────┘           17
                           │
                           ▼
        ┌──────────────────────────────────┐
        │  Einstellung Kalibrierpunkt A     │ ────────┐
        └──────────────────────────────────┘         18
                           │
                           ▼
        ┌──────────────────────────────────┐
        │  Messung    $t_{SA}$              │ ────────┐
        └──────────────────────────────────┘         19
                           │
                           ▼
        ┌──────────────────────────────────┐
        │  Kompensation, Bildung $t_{SA}^{*}$ │ ──────┐
        └──────────────────────────────────┘         20
                           │
                           ▼
        ┌──────────────────────────────────┐
        │  Wegeingabe    $x_A[mm]$          │ ────────┐
        └──────────────────────────────────┘         21
                           │
                           ▼
        ┌──────────────────────────────────┐
        │  Einstellung Kalibrierpunkt B     │ ────────┐
        └──────────────────────────────────┘         22
                           │
                           ▼
        ┌──────────────────────────────────┐
        │  Messung    $t_{SB}$              │ ────────┐
        └──────────────────────────────────┘         23
                           │
                           ▼
        ┌──────────────────────────────────┐
        │  Kompensation, Bildung $t_{SB}^{*}$ │ ──────┐
        └──────────────────────────────────┘         24
                           │
                           ▼
        ┌──────────────────────────────────┐
        │  Wegeingabe    $x_B[mm]$          │ ────────┐
        └──────────────────────────────────┘         25
                           │
                           ▼
        ┌──────────────────────────────────┐
        │  Bestimmung der Steigung $m_E$    │ ────────┐
        └──────────────────────────────────┘         26
                           │
                           ▼
        ┌──────────────────────────────────┐
        │  Bestimmung Kalibriergerade       │ ────────┐
        │     $x = f(t_s^{*})$              │         27
        └──────────────────────────────────┘
                           │
                           ▼
                    ┌─────────────┐
                    │    Ende     │ ──────────┐
                    └─────────────┘           28
```

# Fig. 5

Fig. 6

Motorseite

Getriebeseite

EP 1 048 931 A2